# EUROPEAN PATENT APPLICATION

(11) **EP 4 152 480 A1**
(43) Date of publication of application: **22.03.2023**
(21) Application number: 21198000.8
(22) Date of filing: 21.09.2021
(51) Int. Cl.: H01M 10/625, H01M 10/653, H01M 10/658, H01M 50/526, H01R 12/00

(54) **METHOD OF MANUFACTURING AN ELECTRICALLY INSULATED CONDUCTOR**

(71) Applicant: Samsung SDI Co., Ltd., Yongin-si, Gyeonggi-do 17084 (KR)
(72) Inventor: Reinprecht, Wolfgang, 8144 Attendorf (AT); Montaruli, Mariagrazia, 8010 Graz (AT); Haring, Fritz, 8600 Bruck / Mur (AT)
(74) Representative: Gulde & Partner

(57) **Abstract**

The present disclosure refers to a method of manufacturing an electrically insulated conductor (10) for a battery system, comprising the steps of providing an electrical conductor (20) for conducting an electrical current. The method further comprises the step of covering a circumference (22) of the electrical conductor (20) with at least one electrically insulating cover portion (30, 30'), wherein the electrically insulating cover portion (30, 30') is a fiber mat. The method further comprises the step of welding end portions (31, 31'; 33, 33') of the at least one electrically insulating cover portion (30, 30') to form a closed insulating sleeve around the circumference (22) of the electrical conductor (20).

## Description

### Field of the Disclosure

The present disclosure relates to a method of manufacturing an electrically insulated conductor for a battery system. The present disclosure further relates to an electrically insulated conductor for a battery system and a battery system comprising the same.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development. Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection and sensing unit (CCU) of a battery submodule that interconnects the battery cells of the battery submodule.

Thus, the BMS/BMU is provided for managing the battery pack, such as by protecting the battery from operating outside its safe operating area, monitoring its state, calculating secondary data, reporting that data, controlling its environment, authenticating it and/or balancing it.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened.

Battery systems and battery packs further need to withstand high temperatures. For example, in a thermal propagation event of the battery cells the temperature can rise quickly above temperature levels which cannot be managed. For example, in a thermal runaway hot venting gases may be released by the battery cells.

In battery systems of the state of the art electrical insulators of bus bars or high voltage, HV, cables have rather limited temperature resistance. However, in cases of thermal propagation the temperature may easily exceed the melting temperature of the electric insulators of a HV bus bar and/or HV cable which may result in an internal short circuit followed by critical heat generation, danger for vehicle passengers and the risk that the vehicle might even catch fire.

Common glass sleeves are known as insulators but the glass sleeves are difficult to produce in an industrialization process. A big effort is required to install them over the cable or bus bar and there is no chance of guaranteeing proper closure of the end sections at the terminals.

It is thus an object of the present disclosure to overcome or reduce at least some of the drawbacks of the prior art and to provide a method for manufacturing an electrically insulated conductor which can be manufactured more easily. It is a further aspect of the present disclosure to provide a high temperature insulation which may withstand thermal propagation events and can also be applied to various electrical conductor shapes.

### Summary of Invention

Embodiments of the present disclosure seek to solve at least one of the problems existing in the prior art to at least some extent.

In particular, a method of manufacturing an electrically insulated conductor for a battery system is provided. The method comprises the step of providing an electrical conductor for conducting an electrical current. The method further comprises covering a circumference of the electrical conductor with at least one electrically insulating cover portion, wherein the electrically insulating cover portion is a fiber mat. The method further comprises the step of welding end portions of the at least one electrically insulating cover portion to form a closed insulating sleeve around the circumference of the electrical conductor.

A fiber mat may be in other words a mat made of or comprising a plurality of fibers. The fiber mat may be woven. The term mat may be in other words a fabric. The fibers of the fiber mat are heat-resistant fibers. The circumference of the electrical conductor may be spherical but can also be non-spherical, e.g. square or rectangular. The term closed may be referred to as continuous, endless or gapless. That is, after the welding the step, the formed insulating sleeve entirely surrounds the electrical conductor. The welding may imply that the fibers are melted such that the end portions of the electrically insulating cover portions are melted together.

The method has the advantage that due to the welding of end portions of the fiber mat an endless enclosure around the circumference is easily produced and the joining of the end portions of the fiber mat is achieved by a clean welding process. Since the electrically conductive fibers are heat-resistant, a temperature-resistant enclosure is provided. The fiber mat further has the advantage that it can be used to surround or enclose various shapes of electrical conductors. For example, it can be applied to HV bus bars or HV cables to withstand thermal runaway events. Thus, internal short circuits can be effectively be prevented in such situation.

Preferably, the melting temperature of the fiber may be above 1000°C, preferably above 1100°C. Upon selecting such fibers for the fiber mat, the produced electrically insulating cover may better withstand thermal runaway events. The fibers may preferably comprise one among basalt fibers, silicate fibers or in particular preferably glass fibers. Then, internal short circuits can effectively be prevented.

Preferably, the fibers are glass fibers. The glass fiber has a melting temperature above 1200°C and thus temperature resistant insulation of the electrical conductor is provided. Further, the glass fiber remains clean after the welding process and does not store any carbon in the process. Thus, the manufactured insulation has a high degree of electrical resistance also after the welding process is performed.

The method may comprise wrapping the electrically insulating cover portion around the circumference of the electrical conductor. Further, the method may comprise welding opposite end portions of the electrically insulating cover portion to form the closed insulating sleeve around the circumference of the electrical conductor. Since the fiber mat is bendable, the step of wrapping may be readily performed for such insulating covers. The term wrapping may be in other words be folding around the electrical conductor. Therefore, with only a one-pieced electrically insulating cover portion the electrical conductor may be manufactured by welding the opposite ends of the one-pieced cover portion. This method is very fast and direct. Further, it may be in particular suitable for cylindrical electrical conductors, i.e. for a cable or an electrical wire. However, also a bus bar may be sleeved by a one-pieced cover portion.

The method may comprise the step of covering a first surface of the electrical conductor with a first electrically insulating cover portion and covering a second surface of the electrical conductor opposite to the first surface with a second electrically insulating cover portion. The method may comprise welding end portions of the first electrically insulating cover portion with respective end portions of the second electrically insulating cover portion to form a closed insulating sleeve around the circumference of the electrical conductor. The advantage is that with the two cover portions many different shapes of electrical conductors may be easily surrounded and covered by the produced sleeve. For example, a bus bar may have a rectangular section, in which the opposing surfaces are flat surfaces which may be covered by the two cover portions to then form the insulating sleeve across the side surfaces of the bus bar.

The step of welding includes increasing the temperature of the end portions of the fiber mat to be above the melting temperature of the fibers. Thus, during welding, a weld section is generated in which the fibers are melted together to form a closed junction. The junction or weld section thus may be a homogeneous fiber material, for example a homogeneous glass such that a stable closure using the same base material is provided.

The welding may be performed by laser welding or by arc welding. These welding techniques may have the advantage that narrow and deep localized welds may be achieved. Thereby, precise and/or accurate junctions may be reached.

The fiber mat may be embedded in a resin matrix. The resin may be for example an epoxy resin or a phenolic resin. The resin matrix provides mechanical fixation of the fiber mat and/or the fibers. Further, in the welding process, the resin at the weld sections will be burned or evaporated such that the weld section is of homogeneous fiber material after cooling, in particular of glass in the case of glass fibers, without resin at the weld. The resin matrix also provides dust protection.

In another aspect of the present disclosure, an electrically insulated conductor for a battery system is disclosed. The electrically insulated conductor comprises an electrical conductor for conducting an electrical current. The electrically insulated conductor further comprises an electrically insulating cover formed around a circumference of the electrical conductor. The electrically insulating cover is fiber mat. The electrically insulating cover forms a closed insulating sleeve around the circumference of the electrical conductor. Further, the insulation cover comprises at least one weld section.

The weld section may be referred to as junction of homogeneous fiber material. A fiber mat may be in other words a mat made of or comprising a plurality of fibers. The weld section comprises a melted and homogenized material of the fibers as the result of locally melting/welding the fibers. Thus, in case of glass fibers, the weld section may comprise glass as homogenous material. Apart from the weld section, the insulating cover comprises the fiber mat, which may be woven mat. The term mat may be in other words a fabric. The fibers of the fiber mat are heat-resistant fibers. The circumference of the electrical conductor may be spherical but can also be non-spherical, e.g. square or rectangular. The term closed may be referred to as continuous, endless or gapless. The electrical conductor may be a bus bar or a cable wire, in particular a HV bus bar or a HV cable which may withstand thermal runaway events.

The electrically insulated conductor can provide high temperature protection against thermal runaway and hot venting gases to prevent electrical short circuits. It can be easily and rapidly produced and has a clean welded connection or welded joint. Further, the weld section can be used to open the electrically insulated conductor to provide rework opportunity.

Preferably, the at least one weld section extends in a lengthwise direction of the electrical conductor. Thus, the electrical conductor may be insulated over a large part of the length or entirely over the full length of the electrical conductor.

The heat-resistant fiber may be a glass fiber. The glass fiber has high temperature resistance i. e. the melting temperature is above 1200°C and thus particularly suitable to provide insulation also in a thermal propagation event. The weld section may have a high degree of purity and a high degree of electrical resistance. In further embodiments, the fibers may preferably comprise one among basalt fibers, silicate or glass fibers.

The electrically insulated conductor may comprise one weld section to form the closed insulating sleeve around the circumference of the electrical conductor. For example, the electrical conductor may have a circular cross section such that the electrically insulating cover forms a cylindrical sleeve around the electrical conductor. Such electrically insulated conductor, in particular HV cables, may be easily produced by one welding process.

The electrically insulating cover may comprise a first weld section and a second weld section opposite to the first weld section to form the closed insulating sleeve around the circumference of the electrical conductor. Thus, the electrically insulating cover may due to the two weld sections adapted to be used for many different shapes of electrical conductors, for example bus bars with rectangular cross sections.

The electrically insulating cover may comprises flat portions opposite to each other and inclined portions connecting the flat portions and the weld sections. This configuration may be suitable to provide a closed sleeve for a rectangular or square cross section of an electrical conductor.

The fiber mat may be embedded in a resin matrix. The resin matrix provides mechanical fixation of the fiber mat and/or the fibers. Further, in the welding process, the resin at the weld sections may be removed due to the high temperatures such that the weld section is of homogeneous fiber material after cooling, in particular of glass in the case of glass fibers.

According to another aspect of the present disclosure, a battery pack or a battery system for an electric vehicle may comprise at least one electrically insulated conductor according to one of the embodiments of the present disclosure. The battery system/pack may comprise a plurality of battery cells connected together to provide a high voltage output. The electrically insulated conductors may be used for example for connecting or interconnecting battery cells.

According to another aspect of the present disclosure, a vehicle including a battery pack or a battery system according to embodiments of the disclosure is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1A/1B: illustrates a method of manufacturing an electrically insulated conductor for a battery system according to a first embodiment;
- Fig. 2: illustrates an electrically insulated conductor according to a first embodiment;
- Fig. 3: illustrates a method of manufacturing an electrically insulated conductor for a battery system according to a second embodiment; and
- Fig. 4: illustrates an electrically insulated conductor according to a second embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

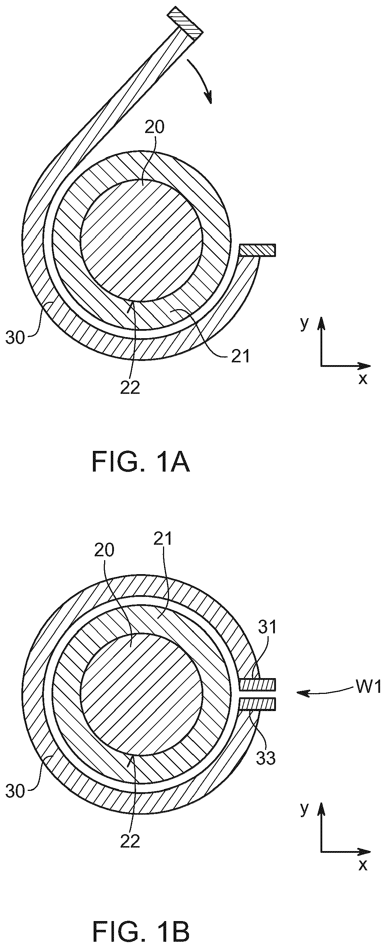

Figs. 1A and 1B illustrate a method of manufacturing an electrically insulated conductor 10 for a battery system or a battery pack according to a first embodiment. A cross sectional view is shown which may be spanned for example by an x-axis and a y-axis.

The method comprises the step providing an electrical conductor 20 for conducting an electrical current. In this example, the electrical conductor 20 may be a cable wire, in particular a high voltage, HV, cable wire. The electrical conductor 20 may comprise a cylindrical shape and may have a circular cross section as shown in Fig. 1A.

The electrical conductor 20 may comprise a cable insulation 21 formed around the electrical conductor 20 to form an annular sleeve around the electrical conductor 20. The cable insulation 21 may form a basic insulation protection for the electrical conductor 20 by using common insulation materials during normal operation. However, in embodiments of the present invention, the cable insulation 21 may be entirely omitted.

The method comprises the step of covering a circumference 22 of the electrical conductor 20 with at least one electrically insulating cover portion 30. In the present disclosure, the electrically insulating cover portion 30 is a fiber mat formed by heat-resistant fibers. The size of the insulating cover portion 30 may be predetermined based on the size, i.e. length and cross section, of the electrical conductor 20. In particular, the melting temperature of the fibers may be above 1000°C, preferably above 1100°C to withstand thermal runaway events and hot venting gases. The fibers in the present case can be one among basalt fibers, silicate fibers or in particular preferably glass fibers. The heat-resistant fibers for mechanical fixation may be embedded in a resin matrix, such that the mat may be enforced. The fiber mat may be a woven. The same material properties may apply also to the further embodiments of this disclosure in Figs. 1B to 4 below.

In the present case, the covering is performed by wrapping the fiber mat around the circumference 22, in this example the cylindrical circumference, of the electrical conductor 20. In this embodiment the electrical conductor 20 is cylindrical. The electrically insulating cover portion 30 in this embodiment is a single electrically insulating cover portion 30.

The method according to this embodiment comprises the welding of opposite end portions 31, 33 of the electrically insulating cover portion 30. Fig. 1B shows a state just before welding. By welding the opposite end portions 31, 33 together the electrically insulating cover portion 30 forms a closed insulating sleeve around the circumference 22 of the electrical conductor 20. That is, the end portion 31 is welded to the end portion 33 of the electrically insulating cover portion 30. The welding is performed where the end portions 31, 33 of the electrically insulating cover portion 30 meet, i.e. where the end portions are brought into touch as illustrated in Fig. 1B. When using glass fiber, the weld remains clean after the welding process and no carbon is stored such that the glass fiber is preferred. The end portions 31, 33 may further provide fiber material for forming the homogeneous connection.

In the process of welding a temperature above the melting temperature of the fibers is applied to the end portions 31, 33 of the fiber mat. Thus, the end portions 31, 33 are melted together and after cooling the melt a homogenized fiber material forms a weld section W1. The welding technique may be laser welding or arc welding to provide an accurate and deep welding connection.

The method uses only a single fiber mat to provide a clean closure. Only one welding process is needed of the wrapping process of the fiber mat. Since the electrically conductive fibers can be heat resistant heat-resistant, a temperature-resistant enclosure is provided.

The described single electrically insulating cover portion 30 is performed for a wire cable in the present case. However, the single, i.e. the one-pieced, electrically insulating cover portion 30 may also be wrapped around a bus bar with a different cross section. The fiber mat may be flexible to be wrapped easily around the circumference 22 of the conductor. For improving the wrapping, also the resin matrix may be omitted.

The manufacturing method is flexible in the shape of the electrical conductor and can be applied to HV bus bars or HV cables to withstand thermal runaway events to effectively prevent internal short circuits.

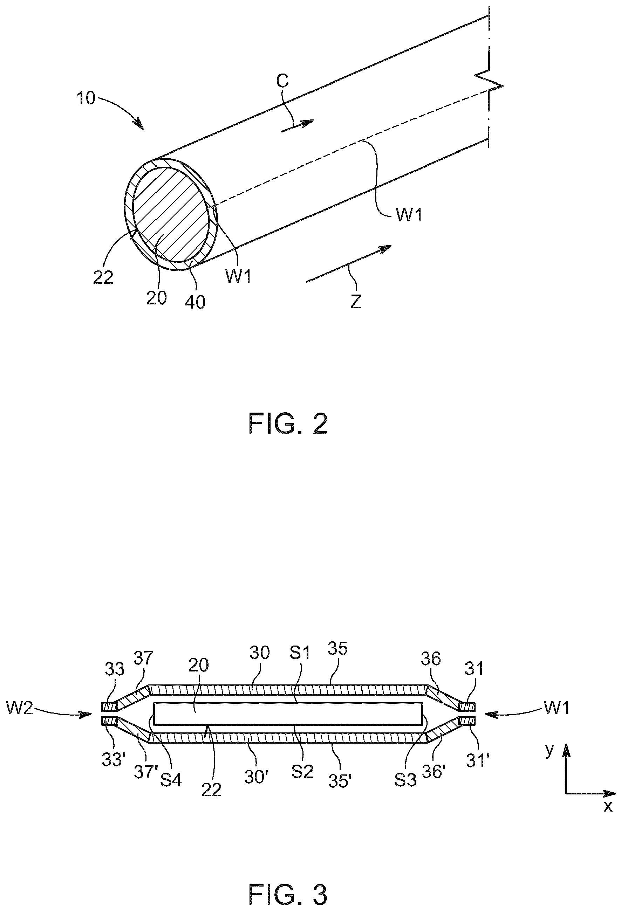

Fig. 2 illustrates an electrically insulated conductor 10 for a battery system or battery pack according to a first embodiment in a perspective view. In particular, the electrically insulated conductor may extend in a lengthwise direction C which may coincide with a z-axis. The electrically insulated conductor 10 may correspond to the electrically insulated conductor 10 of Fig. 1B as disclosed above after the welding process is finished.

An electrically insulating cover 40 is formed around the circumference 22 of the electrical conductor 20. The electrically insulating cover 40 is a fiber mat as described above. The electrically insulating cover 40 extends in a lengthwise direction C of the electrical conductor 20. Thus, the insulation of the electrical conductor 20 is performed over a predetermined length or over the entire length of the electrical conductor 20.

The electrically insulating cover 40 forms a closed insulating sleeve around the circumference 22 of the electrical conductor 20. Since the electrical conductor 20 has a circular cross section, the electrically insulating cover 40 forms a cylindrical sleeve.

The electrically insulating cover 40 comprises one weld section W1. In the present case, the weld section W1 extends in a lengthwise direction C of the electrical conductor 20. The weld section W1 forms a weld line. The weld section W1 comprises homogenous material of the fibers from the fiber mat as response to the welding process in which the fibers are melted. For example, in the case of glass fibers, the weld section W1 may comprise homogeneous glass material at the weld section W1. Further, a resin matrix may be removed at the weld section W1 in response to the high temperatures applied during welding. Thus the resin be contained in the fiber mat but not at the weld section W1.

Due to the weld section W1 a clean junction is provided which allows rapid manufacturing as described above. The closed insulating sleeve due to the weld section S1 becomes endless and closes the electrical conductor 20 in circumferential direction.

The weld section W1 can be used for rework since it can be reopened easier compared to the fiber mat material and rejoined thereafter.

Fig. 3 illustrates a method of manufacturing an electrically insulated conductor 10 for a battery system or battery pack according to a second embodiment. In the present case, an electrical conductor 20 may have a rectangular cross section. The electrical conductor 20 may be a bus bar, in particular a HV bus bar. A cross sectional view is shown which may be spanned for example by an x-axis and a y-axis.

According to Fig. 3, the method comprises the step of covering a first surface S1 of the electrical conductor 20 with a first electrically insulating cover portion 30. Further, the method comprises the step of covering a second surface S2 of the electrical conductor 20 opposite to the second surface S1 with a second electrically insulating cover portion 30'. The first electrically insulating cover portion 30 and the second electrically insulating cover portion 30' may be separate cover portions as shown in Fig. 3. The cover portions 30, 30' are fiber mats according to various embodiments as disclosed above.

The method may further comprise the step of welding end portions 31, 33 of the first electrically insulating cover portion 30 with respective end portions 31', 33' of the second electrically insulating cover portion 30'. In particular, the step of welding, the fibers at the end portions 31, 33, 31', 33' are melted together to form a closed junction. The junction or weld section thus may be a homogeneous fiber material, i.e. a glass.

For example, the first end portion 31 of the first electrically insulating cover portion 30 is welded to the opposing first end portion 31' of the second electrically insulating cover portion 30'. Further, the second end portion 33 of the first electrically insulating cover portion 30 is welded to the opposing second end portion 33' of the second electrically insulating cover portion 30'.

Both electrically insulating cover portions 30, 30' may be inclined or tilted to bring respective end portions 31, 33, 31', 33' of the cover portions 30, 30' in contact, i.e. in touch, with each other to perform the welding. For example, the cover portions 30, 30' may be tilted at their end portions 31, 33, 31', 33' to form a half-shell. The cover portions 30, 30' after tilting may each comprise inclined portions 36, 36'; 37, 37' which are inclined with respect to flat portions 35, 35' of the electrically insulating cover portions 30, 30'. In particular, the inclined portions 36, 36'; 37, 37' are inclined towards the opposite electrically insulating cover portion 30, 30', respectively. The end portions 31, 33, 31', 33' thus may overlap with the respective side surfaces S3, S4 of the electric conductor 20. The cover portions 30, 30' may also comprise vertical portions which extend towards each other. The inclined portions 36, 36'; 37, 37' may however cause less tension in in the fiber mat since the tilting angle is less than orthogonal. In particular in such configuration, the fiber mat may be embedded in a resin matrix to further provide mechanical stiffness.

By welding the first electrically insulating cover portion 30 with the second electrically insulating cover portion 30' at the respective end portions 31, 33, 31', 33' an insulating sleeve of a fiber mat around the circumference 22 of the electrical conductor 20 is formed. The Fig. 3 may show a state just before welding is performed. With the method as described above, many different shapes of electrical conductors may be easily surrounded and covered by the fiber mat sleeves due to the use of two separated cover portions 30, 30' welded together.

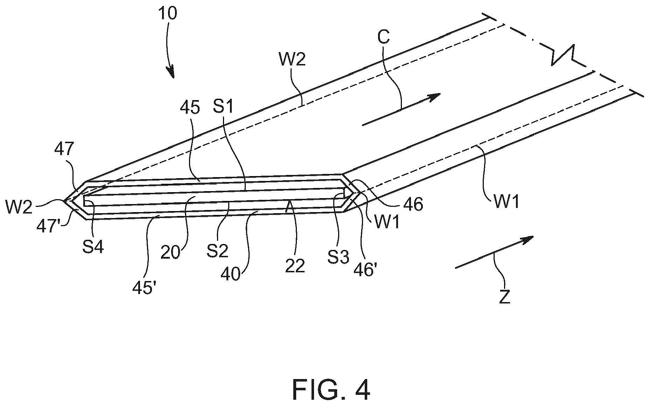

Fig. 4 illustrates an electrically insulated conductor 10 according to a second embodiment in a perspective view. In particular, the electrically insulated conductor 10 may extend in a lengthwise direction C which may coincide with a z-axis. The electrically insulated conductor 10 may be obtained by the manufacturing process as disclosed with respect to Fig. 3 above. In the present embodiment, the electrical conductor 20 has a rectangular cross section and may form a bus bar, in particular a HV bus bar for a battery system.

The electrical conductor 20 comprises a first surface S1, e.g. a top surface, a second surface S2, e.g. a bottom surface, opposite to the first surface S1, and first and second side surfaces S3, S4 connecting the first surface S1 and the second surface S2. The surfaces S1, S2, S3 and S4 form the circumference 22 of the electrical conductor 20. The electrically insulated conductor 10 comprises an electrically insulating cover 40 which forms a closed insulating sleeve around the circumference 22 of the electrical conductor 20.

The electrically insulating cover 40 comprises a first weld section W1 and a second weld section W2 opposite to the first weld section W1. The weld sections W1, W2 extend both in a lengthwise direction C of the electrical conductor 20. Due to the first and second weld sections W1, W2, the closed insulating sleeve around the circumference 22 of the electrical conductor 20 is achieved which can be used for various shapes.

In particular, the first weld section W1 extends along the first side surface S3 of the electrical conductor 20. The first weld section W1 overlaps with the side surface S3. Further, the second weld section W2 extends along the second side surface S4 of the electrical conductor 20 opposite to the first side surface S3.

Further, the electrically insulating cover 40 comprises flat portions 45, 45' opposite to each other. The flat portions 45, 45' may extend parallel to the first surface S1 and the second surface S2 of the electrical conductor 20. The electrically insulating cover 40 in this embodiment further comprises inclined portions 46, 46', 47 and 47'. The inclined portions 46, 46'; 47, 47' connect the flat portions 44, 44' and the weld sections W1, W2. The inclined portions 46, 46'; 47, 47' are thus tilted towards the opposite flat portion 44, 44', respectively.

At the weld sections W1, W2 the electrically insulating cover 40 comprises homogenized fiber material, for example homogeneous glass to provide a clean joint and allow a rapid manufacturing for various shapes. Both weld sections W1, W2 allow for reopening for rework and to rejoin thereafter. For example, in this case, only one of the weld sections among the two weld sections W1, W2 may be reopened.

Due to the welding of end portions of the fiber mat an endless enclosure around the circumference is easily produced and closed by a clean weld. Since the electrically conductive fibers are heat-resistant, preferably glass fibers, a temperature-resistant enclosure is provided. The fiber mat further has the advantage that many different shapes of electrical conductor cross sections can be enclosed by the manufacturing method to withstand thermal runaway events to prevent short circuits.

### Reference signs

- 10: electrically insulated conductor

- C: lengthwise direction

- 20: electrical conductor
- 21: cable insulation
- 22: circumference

- S1: first surface
- S2: second surface
- S3, S4: side surface

- 30, 30': electrically insulating cover portion
- 31, 31': first end portion
- 33, 33': second end portion

- 35, 35': flat portion
- 36, 36': first inclined portion
- 37, 37': second inclined portion

- 40: electrically insulating cover
- 45, 45': flat portion
- 46, 46': first inclined portion
- 47, 47': second inclined portion

- W1, W2: weld section

## Claims

1. A method of manufacturing an electrically insulated conductor (10) for a battery system, comprising the steps of:
- providing an electrical conductor (20) for conducting an electrical current;
- covering a circumference (22) of the electrical conductor (20) with at least one electrically insulating cover portion (30, 30'), wherein the electrically insulating cover portion (30, 30') is a fiber mat;
- welding end portions (31, 31'; 33, 33') of the at least one electrically insulating cover portion (30, 30') to form a closed insulating sleeve around the circumference (22) of the electrical conductor (20).

2. The method of claim 1, wherein the fibers have a melting temperature above 1000 °C, preferably above 1100°C.

3. The method of one of the claims 1 to 2, wherein the fibers are glass fibers.

4. The method of one of the claims 1 to 3, further comprising:
- wrapping an electrically insulating cover portion (30) around the circumference (22) of the electrical conductor (20); and
- welding opposite end portions (31, 33) of the electrically insulating cover portion (30) together to form the closed insulating sleeve around the circumference (22) of the electrical conductor (20).

5. The method of one of the claims 1 to 3, further comprising:
- covering a first surface (S1) of the electrical conductor (20) with a first electrically insulating cover portion (30),
- covering a second surface (S2) of the electrical conductor (20) opposite to the first surface (S1) with a second electrically insulating cover portion (30'),
- welding end portions (31, 33) of the first electrically insulating cover portion (30) with respective end portions (31', 33') of the second electrically insulating cover portion (30') to form the insulating sleeve around the circumference (22) of the electrical conductor (20).

6. The method of one of the claims 1 to 5, wherein the step of welding includes increasing the temperature of the end portions (31, 31'; 33, 33') of the fiber mat to be above the melting temperature of the fibers.

7. The method of one of the claims 1 to 6, wherein the welding is performed by laser welding or by arc welding.

8. The method of one of the claims 1 to 7, wherein the fiber mat is embedded in a resin matrix.

9. An electrically insulated conductor (10) for a battery system (10), comprising:
an electrical conductor (20) for conducting an electrical current,
an electrically insulating cover (40) formed around a circumference (22) of the electrical conductor (20), wherein the electrically insulating cover (40) is a fiber mat, and
wherein the electrically insulating cover (40) forms a closed insulating sleeve around the circumference (22) of the electrical conductor (20) and comprises at least one weld section (W1, W2).

10. The electrically insulated conductor (10) according to claim 9, wherein the at least one weld section (W1, W2) extends in a lengthwise direction (C) of the electrical conductor (20).

11. The electrically insulated conductor (10) of one of the claims 9 to 10, wherein the fibers are glass fibers.

12. The electrically insulated conductor (10) according to one of the claims 9 to 11, wherein the electrical conductor (20) comprises one weld section (W1) to form the closed insulating sleeve around the circumference (22) of the electrical conductor (20).

13. The electrically insulated conductor (10) according to one of the claims 9 to 11, wherein the electrically insulating cover (40) comprises a first weld section (W1) and a second weld section (W2) opposite to the first weld section (W1) to form the closed insulating sleeve around the circumference (22) of the electrical conductor (20).

14. The electrically insulated conductor (10) according to claim 13, wherein the electrically insulating cover (40) comprises flat portions (45, 45') opposite to each other and inclined portions (46, 46'; 47, 47') connecting the flat portions (44, 44') and the weld sections (W1, W2).

15. A battery system for an electric vehicle, comprising at least one electrically insulated conductor (10) according to one of the claims 9 -14.
